# EUROPEAN PATENT SPECIFICATION

(11) **EP 4 466 783 B1**
(45) Date of publication and mention of the grant of the patent: **04.11.2026**
(21) Application number: 22713269.3
(22) Date of filing: 20.01.2022
(51) Int. Cl.: H02M 7/483, H02M 1/44

(54) **HIGH-VOLTAGE CONVERTER ARRANGEMENT**
HOCHSPANNUNGS-STROMRICHTER-ANORDNUNG
DISPOSITIF DE CONVERTISSEUR HAUTE TENSION

(43) Date of publication of application: 27.11.2024
(73) Proprietor: Hitachi Energy Ltd, 8050 Zürich (CH)
(72) Inventor: SCHROEDER, Arne, 3004 Bern (CH); BORMANN, Dierk, 723 53 Västerås (SE); SALINAS, Ener, 722 10 Västerås (SE); ERIKSSON, Goran, 72335 Västerås (SE); DONZEL, Lise, 5430 Wettingen (CH); COTTET, Didier, 8050 Zürich (CH); LARSSON, Mats, 723 48 Västerås (SE); BEIL, Andreas, 8824 Schönenberg (CH); HILLBORG, Henrik, 722 10 Västerås (SE)
(74) Representative: Epping - Hermann - Fischer
(86) International application number: PCT/EP2022/051222
(87) International publication number: WO 2023/138771

(56) References cited:
- EP-A1- 2 608 383
- WO-A1-2021/023369
- CN-A- 102 427 352
- US-B1- 6 711 430

## Description

The present disclosure relates to a high-voltage converter arrangement based on voltage source converters that comprise series-connected switching cells.

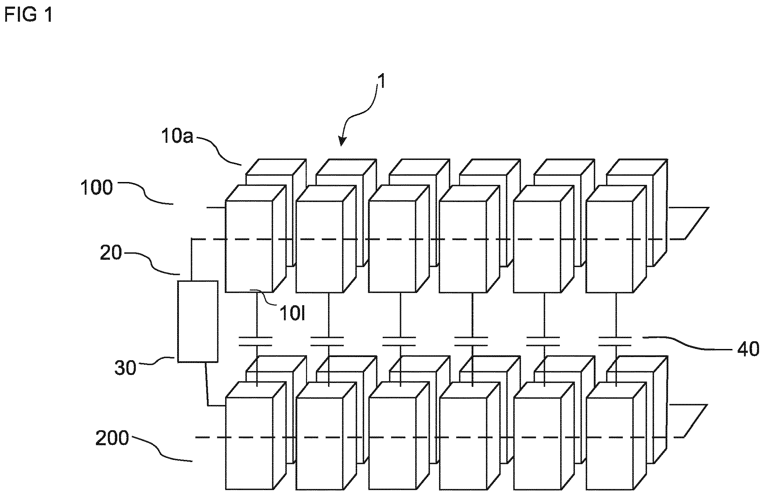

Nowadays HVDC (High-Voltage Direct Current) converters are typically based on voltage source converters (VSC) comprising many series-connected switching cells. Figure 1 shows a simplified illustration of a high-voltage converter arrangement 1 comprising switching cells 10a, ..., 10l which are connected in series with a galvanic connection 20, for example a bus bar, and stacked in a so-called valve structure. The switching cells are arranged in a first layer 100 and a second layer 200 which are arranged in the valve structure one above the other. A similar arrangement, as shown in Figure 1, might be installed in HVDC line-commuted converters (LCC) or flexible alternating current transmission system (FACTS) converters.

Referring to Figure 1, a parasitic inductance 30 is provided by the galvanic connection 20 between the switching cells of the various layers. Moreover, parasitic capacitances 40 are formed between the switching cells of the different layers 100 and 200. The parasitic elements determine the high frequency properties of the valve structure.

The switching cells 10a, ..., 10l comprise power-semiconductor switches that can be turned on and turned off by control action. The switching events of power-semiconductors within the switching cells 10a, ..., 10l generate high frequency currents leading to considerable wideband electromagnetic noise. This noise is partly radiated by a converter station. Moreover, the electromagnetic noise may interfere with secondary electronic systems in the vicinity of the converter station where it can cause electromagnetic compatibility (EMC) issues. For these reasons, HVDC converters must comply with certain EMC requirements, for example Cigré TB 391.

The electromagnetic noise generated by the switching events is typically filtered at system level, by introducing filter circuits in an AC- or DC-yard of a converter substation, or by introducing high frequency damping devices in the main converter current paths.

Such electromagnetic interference (EMI) filtering components are typically bulky, heavy, expensive, and often require additional space. The components used in such filters are specially designed to comply with given requirements; they are not taken off the shelf. Accordingly, the costs for material and engineering can be significant.

Today's HVDC converters exhibit so-called high frequency (HF) reactors which consist of an air core reactor with a parallel resistor. A typical configuration is that HF reactors are installed at the AC-side of each arm, for example, one inside the valve hall and one outside the valve hall for each arm, and on the DC side of each pole. The drawback of this solution is twofold. The HF reactor has limited effectiveness above 2-3 MHz due to the reactor's parasitic capacitance. Furthermore, the HF reactors are not able to damp resonances which occur inside the valve structure as the HF reactor are installed outside of the valve structures.

Besides the above-mentioned solution, EMI filters may be implemented in the connection between corona shields and cell potentials. However, these filters are only efficient for valve structures with large corona shields.

WO 2021/023369 A1 relates to high-voltage converter arrangements to supress electromagnetic noise resulting from resonance loops formed through stray inductances and stray capacitances within the converter arrangement by providing damping units configured, inter alia as LR-elements. EP 2 608 383 A1 relates to a rectifier circuit comprising a plurality of sub-modules in a series connection. Due to an additional inductance between the modules, transient currents which could lead to electromagnetic radiation, are kept local and thus the EMC properties of the circuit are improved. CN 102 427 352 A relates to a control technology of a power electronic high-voltage switch. Converter units are connected in a cascade, wherein L- or LR-elements are arranged between the converter units to supress the oscillation of a balance current between the converter units.

Therefore, there is a need to provide a high-voltage converter arrangement that allows reliable filtering of electromagnetic noise emerging from converter stations.

A high-voltage converter arrangement that provides efficient reduction of high-frequency noise and reduction of valve structure internal resonances is specified in claim 1.

The high-voltage converter arrangement comprises a plurality of switching cells, and at least one damping unit. The at least one damping unit is configured to dampen electromagnetic noise caused by a switching operation within the switching cells. The switching cells are interconnected in series by galvanic connections. The at least one damping unit is arranged on one of the galvanic connections in series with the switching cells. An electrical equivalent circuit of the at least one damping unit comprises at least one inductor and at least one resistor.

The high-voltage converter thus includes one or multiple LR (inductor-resistor) -elements/dampers arranged in series with the switching cells. The switching cells may be embodied as thyristors, or half-bridge or full-bridge cells. The at least one damping unit provides a dissipative element in the series structure of the switching cells which allows to attenuate noise generated by switching cells as well as resonances caused by the parasitic elements of the series structure of the switching cells. Therefore, the high frequency noise of converter stations can be significantly reduced by the proposed damping unit.

According to a possible embodiment of the high-voltage converter arrangement, the at least one damping unit has a first terminal being connected to the galvanic connection for coupling the at least one damping unit in series with at least a first of the switching cells. The at least one damping unit has a second terminal being connected to the galvanic connection for coupling the at least one damping unit in series with at least a second of the switching cells. The at least one inductor and the at least one resistor of the at least one damping unit are connected in parallel between the first and the second terminal.

According to a possible embodiment of the high-voltage converter arrangement, the switching cells are arranged in a first and second layer within a valve structure. The first and second layer of the switching cells are stacked on top of each other in a z-direction and are spaced apart from each other in the z-direction. The respective switching cells of the first and second layer are spaced apart from each other within the first and second layer in an x- and y-direction. The x-, y- and z-direction are orthogonal to each other. The at least one first switching cell and the at least one second switching cell are arranged in one of the first and second layer

That means that the at least one damping unit (LR-damper) can be arranged between each of the switching cells of one of the first and second layer, or between groups of multiple switching cells of one of the first and second layer. The electromagnetic noise is attenuated very close to the noise source, as the LR-dampers are integrated in the valve structures. Moreover, the valve integrated dampers do not require additional space, in contrast to other solutions such as HF reactors installed on an AC-yard or DC-yard. Savings can be expected because LR-dampers might be cheaper than other solutions such as HF reactors.

Compared to RC (resistor-capacitor)-dampers, which are typically installed between a certain potential difference, a big advantage of the LR-dampers is the less serious failure mode. As the LR-damping unit is implemented on constant potential, a short-circuit failure will not impact the functionality of the valve structure, whereas a short-circuit failure of RC dampers can cause severe issues.

According to another possible embodiment of the high-voltage converter arrangement, the first and second layer comprise a respective first portion of the switching cells and a respective second portion of the switching cells. The switching cells of the respective first portion of the first and second layer are spaced apart from each other in the x-direction along the galvanic connection. The switching cells of the respective second portion of the first and second layer are spaced apart from each other in the x-direction along the galvanic connection.

The first and second portion of the switching cells of the first layer are spaced apart from each other in the y-direction. The first and second portion of the switching cells of the second layer are spaced apart from each other in the y-direction. The at least one first switching cell is arranged in the respective first portion of the switching cells of the first and second layer, and the at least one second switching cell is arranged in the respective second portion of the switching cells of the first and second layer. According to another possible embodiment of the high-voltage converter arrangement, the switching cells are arranged in horizontally arranged or vertically stacked first and second groups. The at least one damping unit is arranged between the at least one first switching cell and the at least one second switching cell, wherein the at least one first switching cell is arranged in the first group and the at least one second switching cell is arranged in the second group.

The at least one damping unit comprises at least one magnetic core being arranged around the galvanic connection. The conductor may be enclosed by some magnetic material to realize the at least one magnetic core. In this embodiment, the resistance is provided by the intrinsic (high frequency) losses of the magnetic core. The at least one magnetic core may have a toroidal shape or any other suitable shape to enclose the conductor.

According to the invention, the at least one damping unit comprises a first and second supporting plate being mounted to the galvanic connection. The at least one damping unit comprises at least one resistive rod being mounted between the first and second supporting plate and being arranged around the at least one magnetic core. The at least one magnetic core is mounted onto the galvanic connection and arranged between the first and second supporting plate.

In particular, a plurality of the resistive rods may be arranged around the at least one magnetic core, for example around at least one magnetic toroid. The resistive rods form parallel resistive devices which are advantageous if the high frequency losses of the at least one magnetic core are not sufficient.

According to another possible embodiment of the high-voltage converter arrangement, the at least one damping unit comprises a resistive coating applied onto the at least one magnetic core. The resistive coating is connected to the galvanic connection, and thus provides a parallel resistor to the inductance of the at least one magnetic core. This can avoid the need for the implementation of resistors, as described above. The resistive coating might, moreover, act as a protective housing around the at least one magnetic core.

According to another possible embodiment of the high-voltage converter arrangement, the at least one damping unit may comprise a protective coating being applied onto the at least one magnetic core. A protective coating directly applied to the at least one magnetic core can protect the at least one damping unit from unfavorable environmental conditions. Furthermore, the coating may be configured to prevent leakage currents. The material of the protective coating can be flexible, for example from the material class of elastomers such as silicone rubber, to compensate for differences in thermal expansion between the at least one magnetic core and the galvanic connection.

According to another possible embodiment of the high-voltage converter arrangement, the at least one magnetic core has cooling fins for dissipation of heat.

According to another possible embodiment of the high-voltage converter arrangement, the at least one damping unit may comprise a material of high thermal conductivity being arranged between the galvanic connection and the at least one magnetic core. This configuration allows the galvanic connection to act as a heat sink. The material of high thermal conductivity can be flexible, for example from the material class of elastomers, to compensate for differences in thermal expansion between the at least one magnetic core and the galvanic connection for connecting the switching cells. The thermal conductivity of the flexible material can be further enhanced by the addition of inorganic fillers, such as silica, aluminum oxide or boron nitride. The amount of filler should be high enough to create a percolated network throughout the flexible material.

According to a possible embodiment of the high-voltage converter arrangement, the at least one damping unit is placed inside a power bushing or a current feed-through. This configuration allows the at least one magnetic core to be protected from environmental conditions by the bushing body or the feed-through body.

According to another possible embodiment of the high-voltage converter arrangement, the at least one damping unit comprises a conductor connection interface being configured to attachably or detachably mount the at least one damping unit to the galvanic connection. This configuration allows to implement the at least one damping unit as a pre-assembled component with easily attachable and detachable busbar connection interfaces for simplified manufacturing, testing, assembly and maintenance of the at least one damping unit.

According to another possible embodiment of the high-voltage converter arrangement, the at least one damping unit comprises a helically-shaped portion of the galvanic connection, and a resistor being arranged in parallel to the helically-shaped portion of the galvanic connection. This embodiment of the at least one damping unit is an alternative to the configuration of the at least one damping unit comprising at least one magnetic core as a separate component. Instead of using magnetic materials, the inductance of the at least one damping unit is provided by some coil-shaped conductor which is integrated into the galvanic connection.

According to another possible embodiment, the high-voltage converter arrangement comprises a surge protection device being arranged in parallel to the at least one damping unit to protect the at least one damping unit from overvoltage during transient fault cases. The protection device may be configured as a spark gap, a varistor, etc.

According to another possible embodiment, the high-voltage converter arrangement comprises a protective housing being arranged around the at least one damping unit. The protective housing around the at least one magnetic core allows the at least one damping unit to be protected from unfavorable weather conditions and/or to avoid leaking currents.

The accompanying figures are included to provide a further understanding. In the figures, elements of the same structure and/or functionality may be referenced by the same reference signs. It is to be understood that the embodiments shown in the figures are illustrative representations and are not necessarily drawn to scale.
Figure 1 shows a simplified illustration of a high-voltage converter arrangement comprising switching cells arranged in valve structures with parasitic elements;
Figure 2 shows a simplified equivalent circuit of a high-voltage DC converter comprising switching cells arranged in valve structures;
Figure 3A illustrates the integration of an LR-damping unit between switching cells of a valve structure layer including parasitic elements;
Figures 3B and 3B illustrate possible arrangements of several LR-damping units integrated between switching cells;
Figures 4A and 4B show possible locations of damping units in a valve structure;
Figure 4C shows possible locations of damping units in a cabinet type vertical arrangement of switching cells;
Figure 4D shows possible locations of damping units in a long horizontal arrangement of switching cells;
Figure 5 shows an embodiment of a damping unit comprising magnetic cores mounted around a galvanic connection/busbar;
Figure 6 shows an embodiment of a damping unit comprising a magnetic core being mounted on a galvanic connection/busbar with a spacer to provide an airgap between the magnetic core and the galvanic connection/busbar;
Figure 7 shows an embodiment of a damping unit comprising magnetic cores arranged on a galvanic connection/busbar and parallel resistors arranged between supporting plates;
Figure 8 shows an embodiment of a damping unit integrated into a galvanic connection/busbar;
Figure 9 shows an embodiment of a damping unit comprising magnetic cores coated by a resistive coating;
Figure 10 shows an embodiment of a damping unit comprising magnetic cores coated by a resistive and protective coating;
Figure 11 shows an embodiment of a damping unit comprising magnetic cores respectively coated by a protective coating;
Figure 12 shows an embodiment of a damping unit comprising magnetic cores respectively being coated by a protective coating against the galvanic connection/busbar;
Figure 13 shows an embodiment of a damping unit comprising magnetic cores having fins for heat dissipation;
Figure 14 shows an embodiment of a damping unit comprising a material of thermal conductivity arranged between magnetic cores and a galvanic connection/busbar;
Figure 15 shows an embodiment of a damping unit configured as a pre-assembled component comprising busbar connection interfaces;
Figure 16 shows an embodiment of a damping unit placed inside a power bushing or a current feed-through;
Figure 17 shows an embodiment of a damping unit with a parallel surge protection device for overvoltage protection; and
Figure 18 shows an embodiment of a damping unit encased in a protective housing.

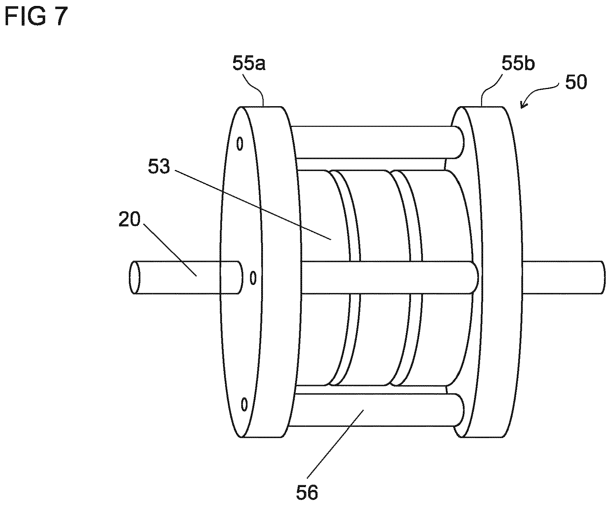

The features of claim 1 are reflected by the embodiment shown in fig. 7. The other embodiments demonstrate further possible implementations and principles of the invention, but do not fall under the scope of protection of claim 1.

While the disclosure is amenable to various modifications and alternative forms, specifics thereof have been shown by way of example in the figures and will be described in detail. It should be understood, however, that the intention is not to limit the disclosure to the particular embodiments described. On the contrary, the intention is to cover all modifications, equivalents, and alternatives falling within the scope of the disclosure defined by the appended claims.

The invention is defined by the features of claim 1, The dependent claims recite advantageous embodiments of the invention.

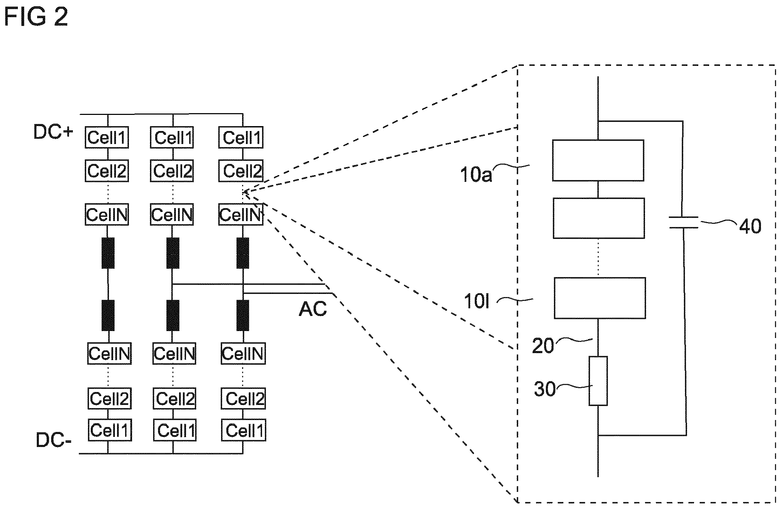

Figure 2 illustrates an equivalent circuit of a high-voltage converter arrangement based on an MMC (modular multilevel converter) topology with N switching cells per arm. The switching cells are arranged in valve structures with several layers as shown in Figure 1. Each valve structure exhibits the main parasitic elements of a busbar stray inductance 30 and stray capacitances 40 between the switching cells of modules and layers, respectively. Inductances and capacitances form LC resonators which cause extensive electromagnetic noise in the frequency range above several 100 kHz, for example 2 MHz.

The proposed approach of a high-voltage converter arrangement enables the electromagnetic noise to be filtered by providing a dissipative element which attenuates the resonances caused by the valve structures' parasitic elements

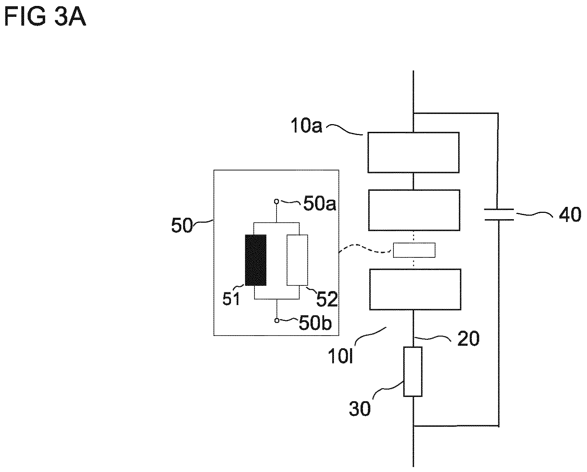

Figure 3A shows an equivalent circuit of switching cells 10a, ..., 10l of a valve structure layer, wherein the switching cells are connected in series along a galvanic connection/ busbar 20. Figure 3A further shows a parasitic busbar stray inductance 30 being arranged in series with the switching cells 10a, ..., 10l and a parasitic stray capacitance 40 in parallel to the switching cells 10a, ..., 10l and the stray inductance 30. In order to attenuate the resonances caused by the parasitic elements 30 and 40, it is proposed to provide at least one damping unit 50 arranged on the galvanic connection 20 in series with the switching cells 10a, ..., 10l. Figure 3A shows the at least one damping unit 50 being arranged between at least a first of the switching cells and at least a second of the switching cells.

The at least one damping unit 50 is configured as an LR (inductive-resistive)-element comprising in electrical equivalent circuit at least one inductor/inductive component 51 and at least one resistor/resistive component 52. The at least one damping unit 50 has a first terminal 50a being connected to the galvanic connection/busbar 20 for coupling the at least one damping unit 50 in series with at least a first of the switching cells. The at least one damping unit 50 has a second terminal 50b being connected to the galvanic connection 20 for coupling the at least one damping unit 50 in series with at least a second of the switching cells. The at least one inductor/inductive component 51 and the at least one resistor/resistive component 52 of the at least one damping unit 50 are connected in parallel between the first terminal 50a and the second terminal 50b.

Typical inductances considered for the proposed LR damping unit 50 range between 0.1 µH to 100 µH. The material for the inductor 51 has preferably Bₛₐₜ > 1 T. Typical resistances range between 1 Ω and 1 kΩ. The damping unit 50 is thus effective in a frequency range from about hundred kHz upwards.

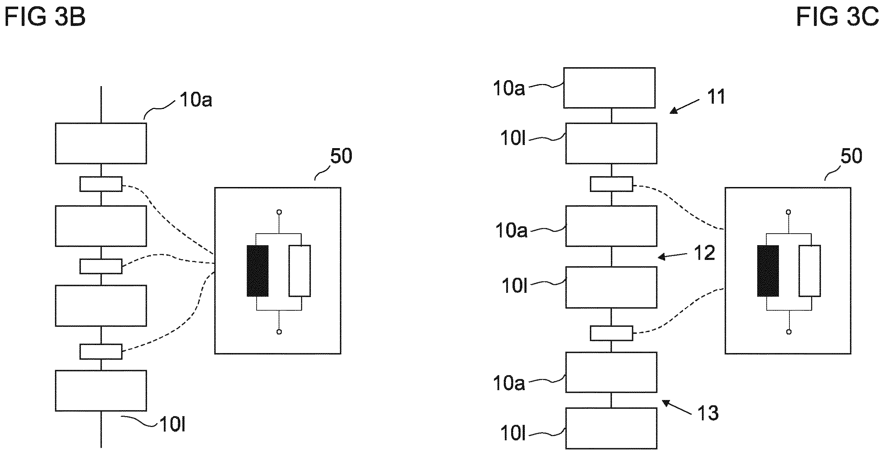

Figures 3B and 3C illustrate proposed arrangements of the LR-damping unit 50 integrated in series with the switching cells 10a, ..., 10l and implemented on the galvanic connection/busbar 20 for interconnecting the switching cells. In particular, Figure 3B shows an arrangement of LR-damping units 50 being arranged between each switching cells 10a, ..., 10l of one arm. Figure 3C shows another possible arrangement of LR-damping units 50 being implemented between various groups 11, 12, 13 of multiple switching cells 10a, ..., 10l.

For high-voltage DC converters with valve structures, it is advantageous to implement LR-damping units within the valve structures to suppress unwanted resonances. The best damping effect is achieved if the LR-damping units 50 are implemented on the galvanic connection/busbar 20 within the valve structure.

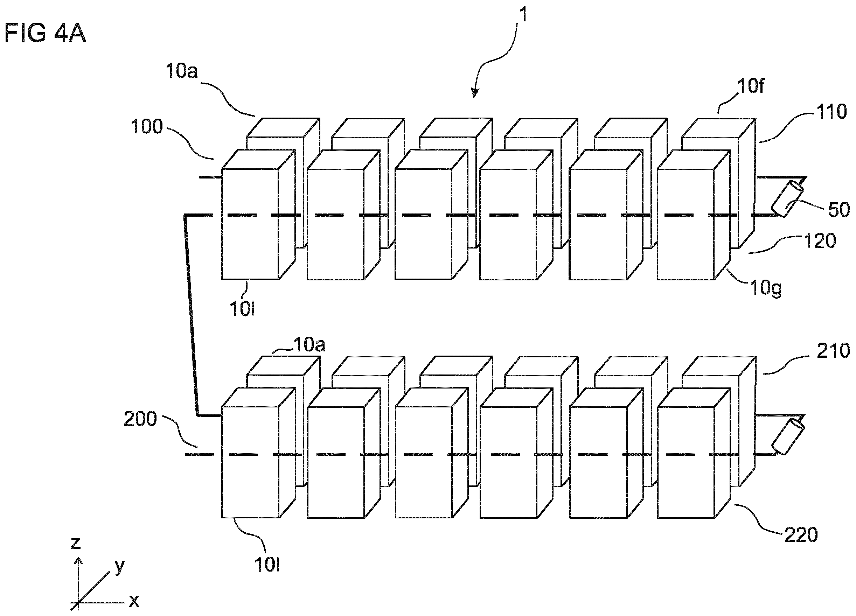

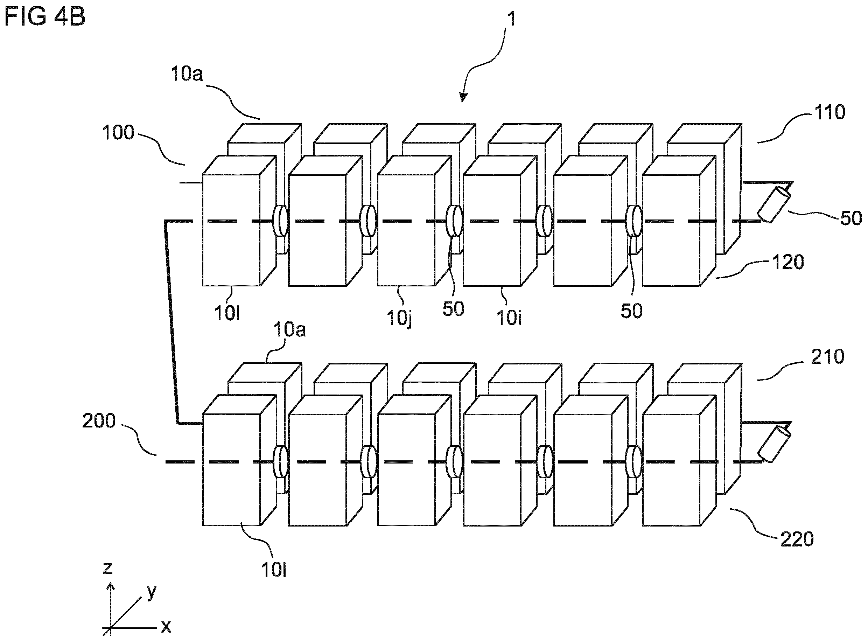

Figures 4A and 4B show an embodiment of a high-voltage converter arrangement 1 comprising a plurality of switching cells 10a, ..., 10l. The high-voltage converter arrangement comprises at least one damping unit 50 being configured to dampen electromagnetic noise caused by a switching operation within the switching cells 10a, ..., 10l. The switching cells 10a, ..., 10l are interconnected in series by a galvanic connection/busbar 20. The at least one damping unit 50 is arranged on the galvanic connection/busbar 20 in series with the switching cells 10a, ..., 10l. The at least one damping unit 50 is configured as an LR-damper comprising at least one inductive component and at least one resistive component, as shown in Figures 3A to 3C.

Referring to the embodiments shown in Figures 4A and 4B, the switching cells 10a, ..., 10l are respectively arranged in at least a first layer 100 and at least a second layer 200 within a valve structure. The first layer 100 and the second layer 200 of the switching cells are stacked on top of each other in a z-direction, and are spaced apart from each other in the z-direction. Furthermore, the respective switching cells 10a, ..., 10l of the first and second layer 100, 200 are spaced apart from each other within the first and second layer 100, 200 in a x-direction and a y-direction. The x-direction, y-direction and z-direction are orthogonal to each other, as illustrated in Figures 4A and 4B. At least a first of the switching cells, for example 10f and 10i, and at least a second of the switching cells, for example 10g and 10j, are arranged in one of the first and second layer 100, 200.

The first layer 100 comprises a first portion 110 and a second portion 120 of the switching cells. The second layer 200 comprises a first portion 210 and a second 220 of the switching cells. The switching cells of the respective first portion 110, 210 of the first and second layer 100, 200 are spaced apart from each other in the x-direction along the galvanic connection/busbar 20. Furthermore, the switching cells of the respective second portion 120, 220 of the first and second layer 100, 200 are spaced apart from each other in the x-direction along the galvanic connection/busbar 20.

The first and second portion 110, 120 of the switching cells of the first layer 100 are spaced apart from each other in the y-direction. Furthermore, the first and second portion 210, 220 of the switching cells of the second layer 200 are spaced apart from each other in the y-direction.

Referring to Figure 4A, the at least one LR damping unit 50 is arranged between at least a first switching cell 10f which is arranged in the first portion 110 of the first layer 100, and at least a second switching cell 10g which is arranged in the second potion 120 of the first layer 100. In the same way, at least one LR-damping unit 50 is arranged in the second layer 200 between the first portion 210 and the second portion 220 of the switching cells. In conclusion, according to the embodiment shown in Figure 4A, one LR-damping unit is implemented per valve structure layer.

Figure 4B shows another possible arrangement of LR-damping units 50, wherein several LR-damping units 50 are provided per valve structure layer. At least one LR-damping unit 50 can be arranged between each of the switching cells of one of the first and second layer 100 and 200. For example, one LR-damping unit 50 can be arranged between each pair of subsequent switching cells of each layer 100 and 200.

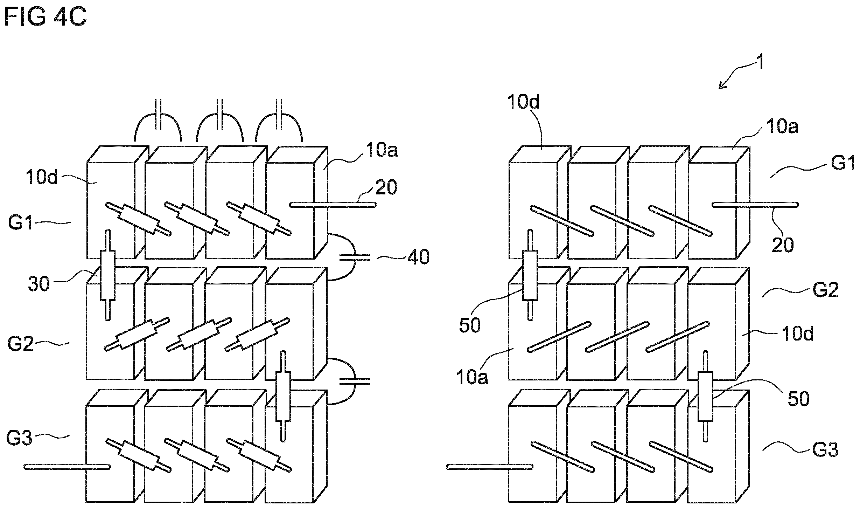

Figure 4C shows a cabinet type vertical arrangement of switching cells, wherein switching cells 10a, ..., 10d are arranged in vertically stacked groups, for example groups G1, G2, and G3. The left drawing shows the stray inductances 30 and the stray capacitances 40 between the switching cells. The right drawing shows possible locations of LR damping units 50. The at least one damping unit 50 may be arranged between at least one of the switching cells of a first group G1 and at least one of the switching cells of a second group G2, or between one of the switching cells of the second group G2 and one of the switching cells of a third group G3.

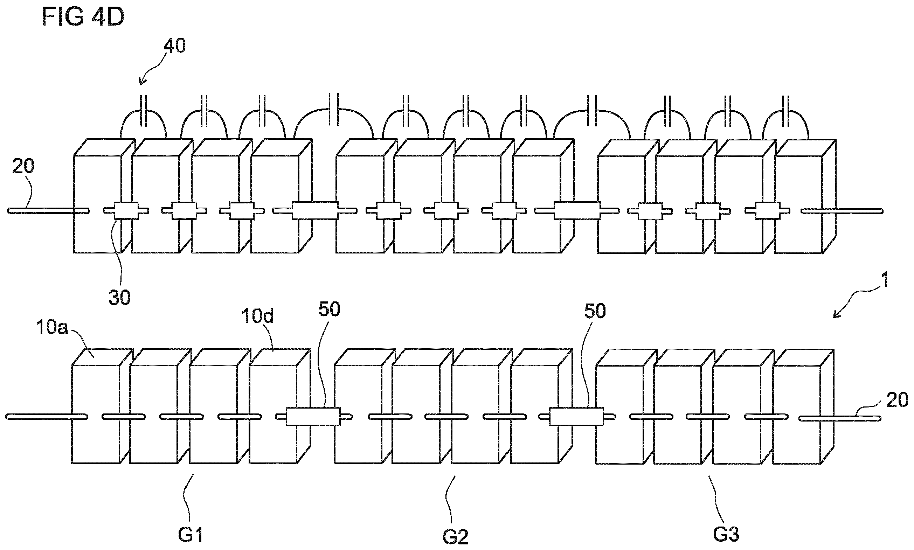

Figure 4D shows a long horizontal arrangement of converter arms, without vertical stacking, wherein switching cells 10a, ..., 10d are arranged in horizontally arranged groups, for example groups G1, G2, and G3. The top drawing shows the stray inductances 30 and the stray capacitances 40 between the switching cells. The bottom drawing shows possible locations of LR damping units 50 between a first group G1 and a second group G2 of the switching cells, or between the second group G2 and a third group G3 of the switching cells.

It should be noted that apart from the arrangements of damping units 50 shown in Figures 4A, 4B, 4C and 4D, other variants with several dampers per layer are possible.

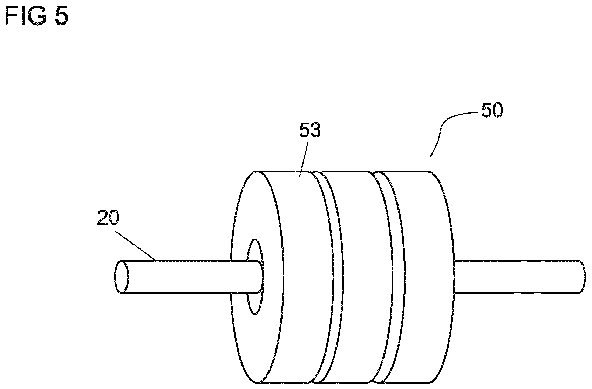

Referring to Figure 5, the at least one LR-damping unit 50 may comprise at least one magnetic core 53 that is arranged around the galvanic connection/busbar 20. The at least one magnetic core 53 may be configured as a magnetic toroid arranged around the galvanic connection/busbar 20. Other shapes of the at least one magnetic core 53 are possible. Figure 5 shows multiple, separate magnetic units 53 which are arranged in series around the galvanic connection/busbar 20.

The material of the magnetic core 53 should provide sufficient high frequency losses to obtain efficient damping in the desired frequency range between 100 kHz and 30 MHz. On the other hand, the cores shall exhibit low losses at 50 Hz to avoid low frequency losses and associated excessive heating of the damping unit. Moreover, the at least one magnetic core 53 should not saturate for typical nominal currents of a converter station, for example 1.5 to 3 kA RMS. Accordingly, appropriate magnetic path length of the toroid as well as appropriate permeability and saturation flux density of the magnetic material must be chosen.

The magnetic material of the at least one magnetic core 53 can be a powder, a ferrite, or any other magnetic material. The most promising elements are powder core toroids due to their comparatively low permeability (µᵣ between 20 and 300) and high saturation flux density (above 1 T). However, the use of gapped cores with high permeability materials, such as ferrites, for example, is also possible.

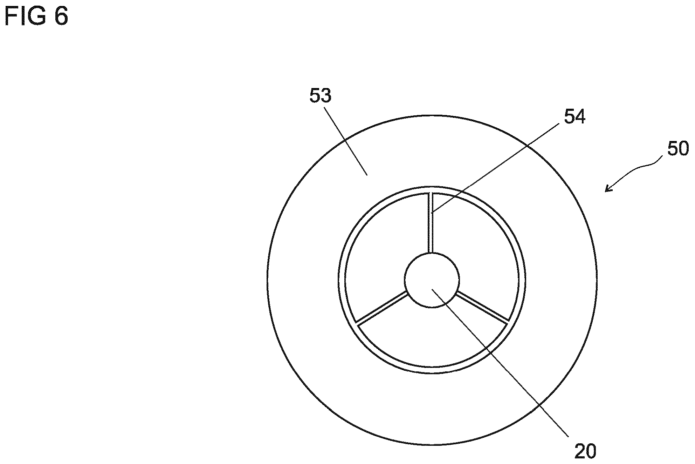

Figure 6 shows an embodiment of an LR-damping unit 50, wherein the at least one magnetic core 53 is mounted on an electrically insulating spacer 54. The spacer 54 is mounted on the galvanic connection/busbar 20 to mount the at least one magnetic core 53, for example the toroids, on the busbar. The spacer 54 is arranged to provide a defined airgap between the galvanic connection/busbar 20 and the at least one magnetic core 53.

Figure 7 shows an embodiment according to claim 1 of the at least one LR-damping unit 50 comprising a first supporting plate 55a and a second supporting plate 55b being mounted to the galvanic connection/busbar 20. The at least one damping unit 50 comprises at least one resistive rod 56 being mounted between the first supporting plate 55a and the second supporting plate 55b, and being arranged around the at least one magnetic core 53. The at least one magnetic core/toroid 53 is mounted onto the galvanic connection/busbar 20 and arranged between the first and second supporting plates 55a, 55b.

The at least one resistive rod 56 realizes a parallel resistor to the at least one magnetic core 53. Figure 7 shows a plurality of resistive rods 56, i.e. a plurality of parallel resistive devices, being arranged around the at least one magnetic core 53. One or more parallel resistive devices might be introduced especially if the high frequency losses of the at least one magnetic core 53 are not sufficient. It has to be noted that the parallel resistance can also be provided by some resistive coating or housing, as explained below.

Referring to the embodiments shown in Figures 5, 6 and 7 the galvanic connection/busbar 20 may be configured as a conductor having a circular, rectangular or any other cross-section. In particular, the galvanic connection/busbar 20 may be configured as a straight conductor enclosed by the magnetic material of the magnetic core 53.

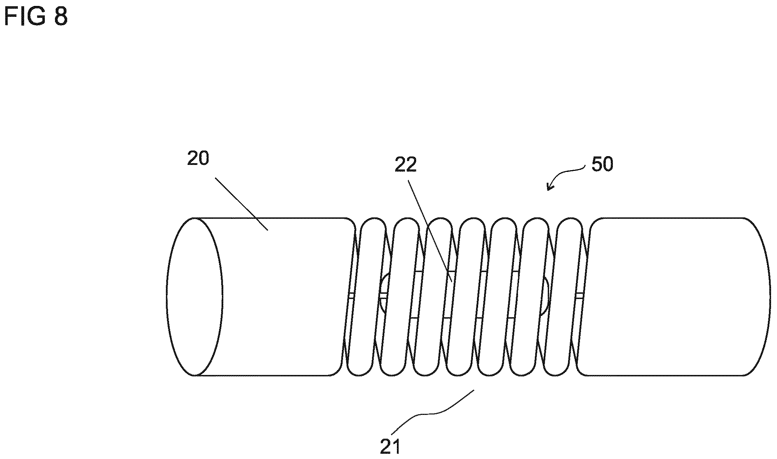

Figures 5, 6 and 7 show embodiments of LR-damping units 50 being realized as separate components. Instead of using separate magnetic materials, the inductance of the at least one damping unit 50 can be provided by some coil-shaped conductor, for example a spiral busbar with a parallel resistor to form an LR-damping unit 50, as shown in Figure 8.

Referring to Figure 8, the at least one damping unit 50 comprises a helically-shaped portion 21 of the galvanic connection/busbar 20. Furthermore, a resistive element 22 is arranged in parallel to the helically-shaped portion 21 of the galvanic connection 20. According to the embodiment shown in Figure 8, the LR-damping unit is integrated in the galvanic connection/busbar 20.

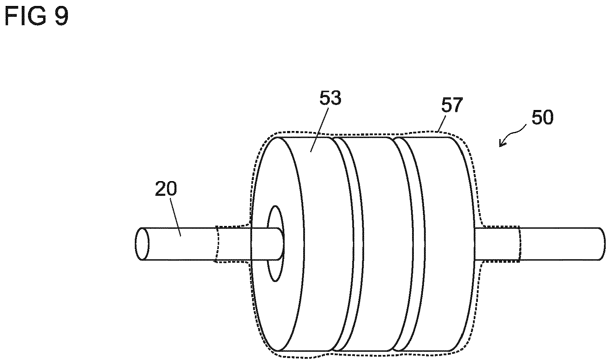

Figure 9 shows an embodiment of an LR-damping unit 50 comprising a resistive coating 57 that is applied onto at least one magnetic core 53. Figure 9 shows magnetic toroids 53 arranged around the galvanic connection/busbar 20, wherein the resistive coating 57 covers the magnetic toroids 53 and a portion of the galvanic connection/busbar 20 on the left and right side of the magnetic toroids. The resistive material of the coating 57 provides a parallel resistor to the inductance of the magnetic cores 53. This can prevent the need for the implementation of resistors as separate devices. Moreover, the resistive material covering the at least one magnetic core 53 and portions of the galvanic connection/busbar 20 provides a protective housing for the LR-damping unit.

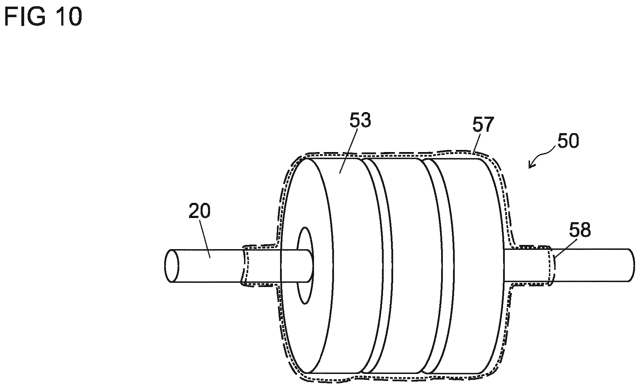

Referring to Figure 10, the LR-damping unit 50 may comprise a protective coating 58 being applied onto the at least one magnetic core 53. The protective coating 58 can be arranged to cover the resistive coating 57, as shown in Figure 10. On the galvanic connection/busbar 20, the protective coating 58 protrudes above the resistive coating 57.

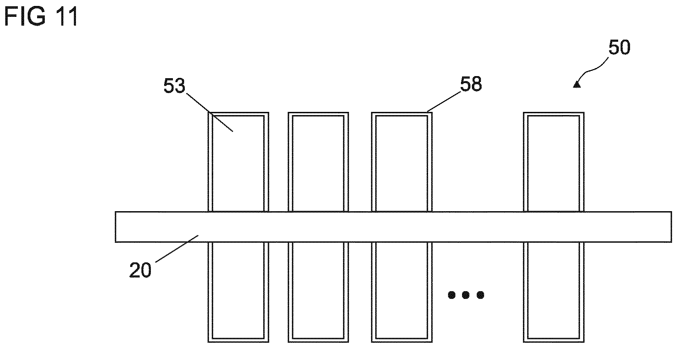

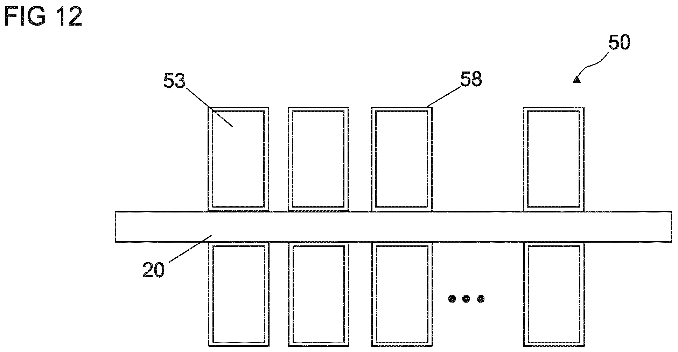

Referring to Figure 11, the protective coating 58 covers each of the magnetic cores/magnetic toroids 53 individually without being in contact with the galvanic connection/busbar 20. Figure 12 shows a configuration, where the protective coating directly covers the magnetic cores/magnetic toroids 53 individually, and is also arranged between the magnetic cores/magnetic toroids 53 and the galvanic connection/busbar 20. The protective coating 58 directly applied to the magnetic cores 53, as illustrated in Figures 11 and 12, allows the magnetic cores to be protected from environmental conditions, such as direct sunlight, rain, moisture, dirt, aggressive pollutants, etc. Magnetic cores protected as such can be directly installed on outdoor busbars. The protective coating 58 arranged between the magnetic cores 53 and the galvanic connection/busbar 20 allows to compensate for differences in thermal expansion between the magnetic cores 53 and the busbar 20.

The protective material can be flexible, for example from the material class of elastomers such as silicone rubber, to compensate for differences in thermal expansion between the at least one magnetic core 53 and the galvanic connection/ busbar 20 or a spacer 54. The coating material of the LR-damping unit 50 may be outdoor grade epoxy resin, enamel or ceramic. Furthermore, the coating material may have a hydrophobicity transfer property. The protective coating may be embodied to avoid leakage currents.

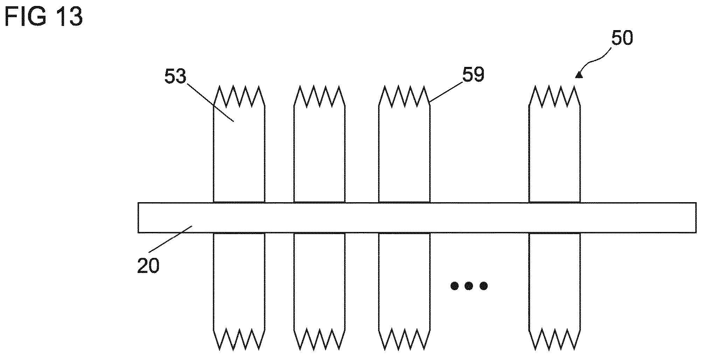

Referring to Figure 13, the at least one magnetic core 53 of the LR-damping unit 50 may be provided with cooling fins 59 for enhanced dissipation of heat generated within the magnetic material.

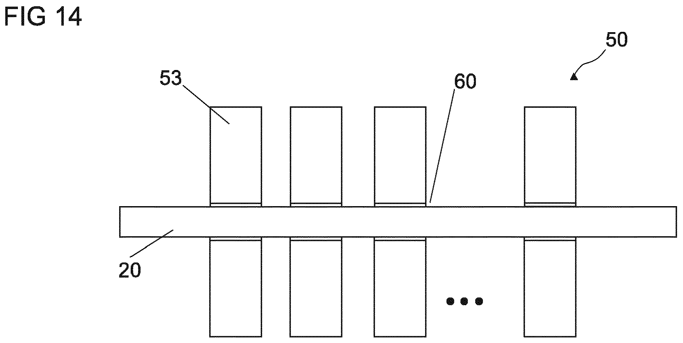

Figure 14 shows an embodiment of an LR-damping unit 50 comprising a material of high thermal conductivity 60 being arranged between the galvanic connection/busbar 20 and the at least one magnetic core 53. Magnetic cores with material of high thermal conductivity at the interface to the galvanic connection/busbar 20 allow the galvanic connection/busbar to act as a heat sink. The material of high thermal conductivity can be flexible, for example from the material class of elastomers, to compensate for differences in thermal expansion between the at least one magnetic core 53 and the galvanic connection/busbar 20.

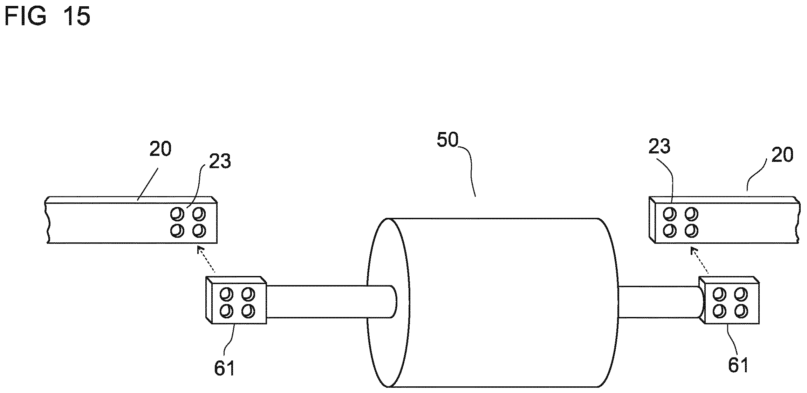

Referring to Figure 15, the LR-damping unit 50 may comprise a conductor connection interface 61 being configured to attachably or detachably mount the LR-damping unit 50 to the galvanic connection/busbar 20. This configuration is especially advantageous for simplified manufacturing, testing, assembly and maintenance. Figure 15 shows the LR-damping unit 50 implemented as a pre-assembled component with busbar connection interfaces 61 which allow the LR-damping unit 50 to be easily attached to and easily detached from connection interfaces 23 of the galvanic connection/busbar 20.

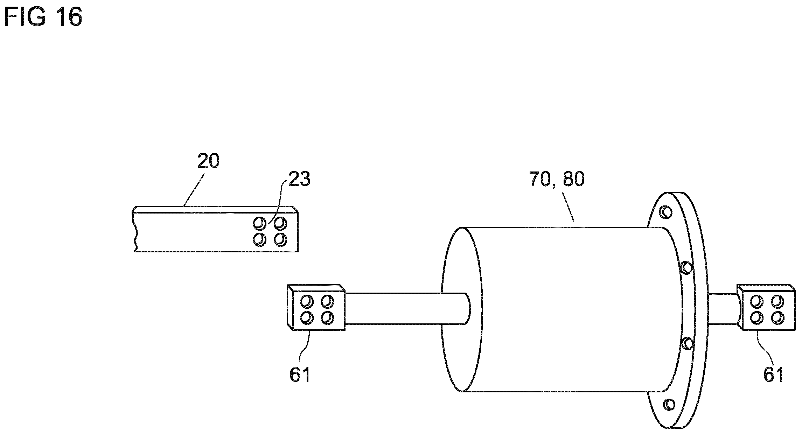

Figure 16 shows an embodiment of the LR-damping unit 50 being placed inside a power bushing 70 or a current feed-through 80.

The at least one magnetic core of the damping unit 40 may be placed inside the power bushing 70 around the bushing conductor, as illustrated in Figure 16. The at least one magnetic core is thus protected from environmental conditions by the bushing body. The bushing body may comprise any insulating material, such as porcelain, polymer, etc.

According to another embodiment, the at least one magnetic core of the damping unit 50 may be placed inside the current feed-through 80 so that no voltage difference is present between the enclosure and the conductor. The feed-through may comprise an outer shell, for example made of a metallic material, and a conductor, for example of cylindrical or rectangular shape, around which the magnetic core is placed. The feed-through may be filled by an insulating potting material, such as casted epoxy, polyurethane, compressible silicone etc., to form a prefabricated unit. The current may be prevented from flowing through the metallic shell by an insulating seal placed between the feed-through flange and the enclosure. The magnetic core is protected from weather conditions by the feed-through body.

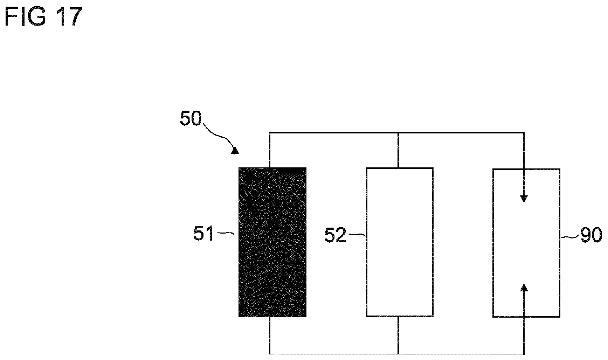

Referring to Figure 17, the high-voltage converter arrangement may comprise a surge protection device 90 being arranged in parallel to the LR-damping unit 50 comprising inductor/inductive component 51 and resistor/resistive component 52, to protect the damping unit 50 from overvoltage during transient fault cases, such as lightning or switching impulses. The surge protection device 90 may be configured as a spark gap, a varistor, etc.

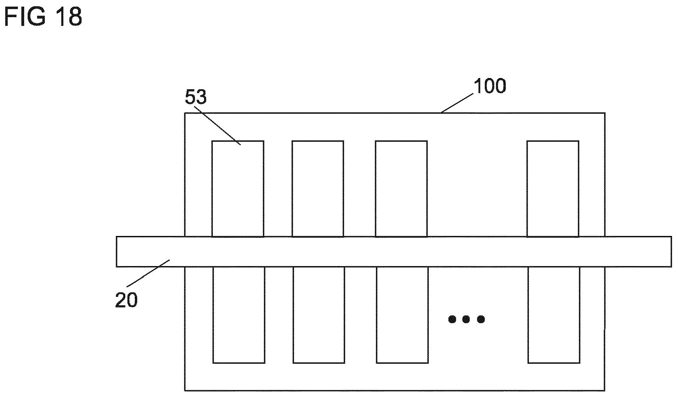

As illustrated in Figure 18, a protective housing 100 may be arranged around the LR-damping unit 50. Figure 18 shows protective housing 100 being arranged around magnetic cores 53 to protect the damping unit 50 from unfavorable weather conditions, such as direct sunlight, rain, moisture, dirt, aggressive pollutants and/or to avoid leaking currents. Furthermore, the housing may protect mechanically, for example from impact. The material of the housing may be, for example, silicone rubber, outdoor grade epoxy resin, enamel, ceramic etc. Moreover, the protective housing may have hydrophobicity transfer property.

According to another possible embodiment, the protective housing 100 may be configured as an equipotential housing for field-shaping purposes. For a housing with equipotential field shaping, the material needs to be electrically conductive. The required electrical conductivity can be obtained by addition of electrically conductive fillers, such as carbon black, to the polymer formulations. The added amount of electrically conductive fillers should be high enough to create a percolated network in the matrix.

The key benefits of the proposed arrangement and design of the at least one LR-damping unit 50 in a high-voltage converter arrangement can be summarized as follows:
The high frequency noise of converter substations can be significantly reduced by the proposed LR-damping unit.

The great advantage of the LR-damping unit over an RC-damper is the failure mode. As the LR-damping unit is implemented on constant potential, a short-circuit failure will not impact the functionality of the valve structure, whereas a short-circuit failure of RC-dampers can cause severe issues.

The electromagnetic noise is cancelled very close to the noise source as the LR-damping units are integrated in the valve structures.

Except for a minimal additional space for the magnetic cores, the LR-damping units do not require additional space, compared to other solutions such as HF-reactors installed on the AC-yard or DC-yard. Savings can be expected because LR-damping units might be cheaper than other solutions such as HF-reactors.

The use of the at least one LR-damping unit for a high-voltage converter arrangements might facilitate the operation of high-voltage DC converter stations within very EM-sensitive environments.

The proposed design and arrangement of the LR-damping units can be an enabler for new semiconductor technologies, such as silicon carbide (SiC), which produce significantly more noise at high frequencies.

The LR-damping unit can be designed in such a way that a quick replacement can be performed if needed during maintenance.

The LR-damping unit can be modularized which gives possibilities for easy adaption for different requirements or for modifications due to changed requirements of an already installed base.

The proposed LR-damping unit ca be reliably used in outdoor environments covering all of the climate zones around the world.

Moreover, the proposed LR-damping unit can be reliably used in polluted indoor or outdoor environments.

The LR-damping unit can operate with nominal currents of more than 1 kA RMS.

Each individual magnetic core of the LR-damping unit is light and will not distress the valve structure.

The embodiments shown in Figures 1 to 18 as stated represent exemplary embodiments of the high-voltage converter arrangement; therefore they do not constitute a complete list of all embodiments according to the high-voltage converter arrangement. Actual converter arrangements may vary from the embodiments shown in figures.

### Reference Signs

- 1: high-voltage converter arrangement
- 10a, ...,10l: switching cells
- 20: galvanic connection
- 21: helically-shaped portion of the galvanic connection
- 22: resistive element
- 23: busbar connection interface
- 30: parasitic conductance
- 40: parasitic capacitance
- 50: damping unit
- 51: inductor
- 52: resistor
- 53: magnetic core
- 54: spacer
- 55a, 55b: supporting plates
- 56: conductive rod
- 57: resistive coating
- 58: protective coating
- 59: cooling fins
- 60: material of high thermal conductivity
- 61: conductor connection interface
- 70: power busing
- 80: current feed-through
- 90: surge protection device
- 100, 200: layer of valve structure
- 110, 210: first portion of switching cells
- 120, 220: second portion of switching cells

## Claims

1. A high-voltage converter arrangement, comprising:
- a plurality of switching cells (10a, ..., 10l),
- at least one damping unit (50) being configured to dampen electromagnetic noise caused by a switching operation within the switching cells (10a, ..., 10l),
- wherein the switching cells (10a, ..., 10l) are interconnected in series by galvanic connections (20),
- wherein the at least one damping unit (50) is arranged on one of the galvanic connections (20) in series with the switching cells (10a, ... 10l),
- wherein an electrical equivalent circuit of the at least one damping unit (50) comprises at least one inductor (51) and at least one resistor (52),
- wherein the at least one damping unit (50) comprises at least one magnetic core (53) being arranged around the galvanic connection (20),
**characterized in that** the at least one damping unit (50) comprises a first and second supporting plate (55a, 55b) being mounted to the galvanic connection (20), wherein the at least one damping unit (50) comprises at least one resistive rod (56) being mounted between the first and second supporting plate (55a, 55b), and wherein the at least one magnetic core (53) is mounted onto the galvanic connection (20) and arranged between the first and second supporting plate (55a, 55b).

2. The high-voltage converter arrangement of claim 1,
- wherein the at least one damping unit (50) has a first terminal (50a) being connected to the galvanic connection (20) for coupling the at least one damping unit (50) in series with at least a first of the switching cells (10f, 10i),
- wherein the at least one damping unit (50) has a second terminal (50b) being connected to the galvanic connection (20) for coupling the at least one damping unit (50) in series with at least a second of the switching cells (10g, 10j),
- wherein the at least one inductor (51) and the at least one resistor (52) of the at least one damping unit (50) are connected in parallel between the first and the second terminal (50a, 50b).

3. The high-voltage converter arrangement of claim 2,
- wherein the switching cells (10a, ..., 10l) are arranged in a first and second layer (100, 200) within a valve structure,
- wherein the first and second layer (100, 200) of the switching cells (10a, ..., 10l) are stacked on top of each other in a z-direction and are spaced apart from each other in the z-direction,
- wherein the respective switching cells (10a, ..., 10l) of the first and second layer (100, 200) are spaced apart from each other within the first and second layer (100, 200) in a x- and y-direction, wherein the x-, y- and z-direction are orthogonal to each other,
- wherein the at least one first switching cell (10f, 10i) and the at least one second switching cell (10g, 10j) are arranged in one of the first and second layer (100, 200).

4. The high-voltage converter arrangement of claim 3,
- wherein the first and second layer (100, 200) comprise a respective first portion (110, 210) of the switching cells (10a, ..., 10l) and a respective second portion (120, 220) of the switching cells (10a, ..., 10l),
- wherein the switching cells (10a, ..., 10l) of the respective first portion (110, 210) of the first and second layer (100, 200) are spaced apart from each other in the x-direction along the galvanic connection (20), and the switching cells (10a, ..., 10l) of the respective second portion (120, 220) of the first and second layer (100, 200) are spaced apart from each other in the x-direction along the galvanic connection (20),
- wherein the first and second portion (110, 120) of the switching cells (10a, ..., 10l) of the first layer (100) are spaced apart from each other in the y-direction, and the first and second portion (210, 220) of the switching cells (10a, ..., 10l) of the second layer (200) are spaced apart from each other in the y-direction,
- wherein the at least one first switching cell (10f) is arranged in the respective first portion (110, 210) of the switching cells of the first and second layer (100, 200), and the at least one second switching cell (10g) is arranged in the respective second portion (120, 220) of the switching cells of the first and second layer (100, 200).

5. The high-voltage converter arrangement of claim 2,
- wherein the switching cells (10a, ..., 10d) are arranged in horizontally arranged or vertically stacked first and second groups (G1, G2),
- wherein the at least one damping unit (50) is arranged between the at least one first switching cell (10d) and the at least one second switching cell (10a)
- wherein the at least one first switching cell (10d) is arranged in the first group (G1) and the at least one second switching cell (10a) is arranged in the second group (G2).

6. The high-voltage converter arrangement of any of the claims 1 to 5,
wherein the at least one damping unit (50) comprises a resistive coating (57) and/or a protective coating (58) applied onto the at least one magnetic core (53).

7. The high-voltage converter arrangement of any of the claims 1 to 6,
wherein the at least one magnetic core (53) has cooling fins (59) for dissipation of heat.

8. The high-voltage converter arrangement of any of the claims 1 to 7,
wherein the at least one damping unit (50) comprises a material of high thermal conductivity (60) being arranged between the galvanic connection (20) and the at least one magnetic core (53).

9. The high-voltage converter arrangement of any of the claims 1 to 8,
wherein the at least one damping unit (50) is placed inside a power bushing (70) or a current feed-through (80).

10. The high-voltage converter arrangement of any of the claims 1 to 9,
wherein the at least one damping unit (50) comprises a conductor connection interface (61) being configured for attachably or detachably mounting the at least one damping unit (50) to the galvanic connection (20)

11. The high-voltage converter arrangement of any of the claims 1 to 5,
wherein the at least one damping unit comprises a helically-shaped portion (21) of the galvanic connection (20), and a resistive element (22) being arranged in parallel to the helically-shaped portion of the galvanic connection (20).

12. The high-voltage converter arrangement of any of the claims 1 to 11, comprising:
a surge protection device (90) being arranged in parallel to the at least one damping unit (50) to protect the at least one damping unit (50) from overvoltage during transient fault cases.

13. The high-voltage converter arrangement of any of the claims 1 to 12, comprising:
a protective housing (100) being arranged around the at least one damping unit (50).

## Patentansprüche

1. Hochspannungs-Stromrichteranordnung, umfassend:
- eine Mehrzahl von Schaltzellen (10a, ..., 10l),
- mindestens eine Dämpfungseinheit (50), die dazu ausgelegt ist, elektromagnetisches Rauschen zu dämpfen, das durch einen Schaltvorgang innerhalb der Schaltzellen (10a, ..., 10l) verursacht wird,
- wobei die Schaltzellen (10a, ..., 10l) durch galvanische Verbindungen (20) in Reihe miteinander geschaltet sind,
- wobei die mindestens eine Dämpfungseinheit (50) auf einer der galvanischen Verbindungen (20) in Reihe mit den Schaltzellen (10a, ..., 10l) angeordnet ist,
- wobei eine elektrische Ersatzschaltung der mindestens einen Dämpfungseinheit (50) mindestens eine Induktivität (51) und mindestens einen Widerstand (52) umfasst,
- wobei die mindestens eine Dämpfungseinheit (50) mindestens einen Magnetkern (53) umfasst, der um die galvanische Verbindung (20) herum angeordnet ist,
**dadurch gekennzeichnet, dass** die mindestens eine Dämpfungseinheit (50) eine erste und eine zweite Stützplatte (55a, 55b) umfasst, die an der galvanischen Verbindung (20) montiert sind, wobei die mindestens eine Dämpfungseinheit (50) mindestens einen Widerstandsstab (56) umfasst, der zwischen der ersten und der zweiten Stützplatte (55a, 55b) montiert ist, und wobei der mindestens eine Magnetkern (53) auf der galvanischen Verbindung (20) montiert ist und zwischen der ersten und der zweiten Stützplatte (55a, 55b) angeordnet ist.

2. Hochspannungs-Stromrichteranordnung nach Anspruch 1,
- wobei die mindestens eine Dämpfungseinheit (50) einen ersten Anschluss (50a) aufweist, der mit der galvanischen Verbindung (20) verbunden ist, um die mindestens eine Dämpfungseinheit (50) in Reihe mit mindestens einer ersten der Schaltzellen (10f, 10i) zu koppeln,
- wobei die mindestens eine Dämpfungseinheit (50) einen zweiten Anschluss (50b) aufweist, der mit der galvanischen Verbindung (20) verbunden ist, um die mindestens eine Dämpfungseinheit (50) in Reihe mit mindestens einer zweiten der Schaltzellen (10g, 10j) zu koppeln,
- wobei die mindestens eine Induktivität (51) und der mindestens eine Widerstand (52) der mindestens einen Dämpfungseinheit (50) zwischen dem ersten und dem zweiten Anschluss (50a, 50b) parallelgeschaltet sind.

3. Hochspannungs-Stromrichteranordnung nach Anspruch 2,
- wobei die Schaltzellen (10a, ..., 10l) in einer ersten und einer zweiten Schicht (100, 200) innerhalb einer Ventilstruktur angeordnet sind,
- wobei die erste und die zweite Schicht (100, 200) der Schaltzellen (10a, ..., 10l) in einer z-Richtung übereinandergestapelt sind und in der z-Richtung voneinander beabstandet sind,
- wobei die jeweiligen Schaltzellen (10a, ..., 10l) der ersten und der zweiten Schicht (100, 200) innerhalb der ersten und der zweiten Schicht (100, 200) in einer x- und einer y-Richtung voneinander beabstandet sind, wobei die x-, die y- und die z-Richtung orthogonal zueinander sind,
- wobei die mindestens eine erste Schaltzelle (10f, 10i) und die mindestens eine zweite Schaltzelle (10g, 10j) in einer von der ersten und der zweiten Schicht (100, 200) angeordnet sind.

4. Hochspannungs-Stromrichteranordnung nach Anspruch 3,
- wobei die erste und die zweite Schicht (100, 200) einen jeweiligen ersten Abschnitt (110, 210) der Schaltzellen (10a, ..., 10l) und einen jeweiligen zweiten Abschnitt (120, 220) der Schaltzellen (10a, ..., 10l) umfassen,
- wobei die Schaltzellen (10a, ..., 10l) des jeweiligen ersten Abschnitts (110, 210) der ersten und der zweiten Schicht (100, 200) in der x-Richtung entlang der galvanischen Verbindung (20) voneinander beabstandet sind und die Schaltzellen (10a, ..., 10l) des jeweiligen zweiten Abschnitts (120, 220) der ersten und zweiten Schicht (100, 200) in der x-Richtung entlang der galvanischen Verbindung (20) voneinander beabstandet sind,
- wobei der erste und der zweite Abschnitt (110, 120) der Schaltzellen (10a, ..., 10l) der ersten Schicht (100) in der y-Richtung voneinander beabstandet sind und der erste und der zweite Abschnitt (210, 220) der Schaltzellen (10a, ..., 10l) der zweiten Schicht (200) in der y-Richtung voneinander beabstandet sind,
- wobei die mindestens eine erste Schaltzelle (10f) in dem jeweiligen ersten Abschnitt (110, 210) der Schaltzellen der ersten und der zweiten Schicht (100, 200) angeordnet ist und die mindestens eine zweite Schaltzelle (10g) in dem jeweiligen zweiten Abschnitt (120, 220) der Schaltzellen der ersten und der zweiten Schicht (100, 200) angeordnet ist.

5. Hochspannungs-Stromrichteranordnung nach Anspruch 2,
- wobei die Schaltzellen (10a, ..., 10d) in einer ersten und einer zweiten horizontal angeordneten oder vertikal gestapelten Gruppe (G1, G2) angeordnet sind,
- wobei die mindestens eine Dämpfungseinheit (50) zwischen der mindestens einen ersten Schaltzelle (10d) und der mindestens einen zweiten Schaltzelle (10a) angeordnet ist,
- wobei die mindestens eine erste Schaltzelle (10d) in der ersten Gruppe (G1) angeordnet ist und die mindestens eine zweite Schaltzelle (10a) in der zweiten Gruppe (G2) angeordnet ist.

6. Hochspannungs-Stromrichteranordnung nach einem der Ansprüche 1 bis 5,
wobei die mindestens eine Dämpfungseinheit (50) eine Widerstandsbeschichtung (57) und/oder eine Schutzbeschichtung (58) umfasst, die auf den mindestens einen Magnetkern (53) aufgebracht ist/sind.

7. Hochspannungs-Stromrichteranordnung nach einem der Ansprüche 1 bis 6,
wobei der mindestens eine Magnetkern (53) Kühlrippen (59) zur Ableitung von Wärme aufweist.

8. Hochspannungs-Stromrichteranordnung nach einem der Ansprüche 1 bis 7,
wobei die mindestens eine Dämpfungseinheit (50) ein Material mit hoher Wärmeleitfähigkeit (60) umfasst, das zwischen der galvanischen Verbindung (20) und dem mindestens einen Magnetkern (53) angeordnet ist.

9. Hochspannungs-Stromrichteranordnung nach einem der Ansprüche 1 bis 8,
wobei die mindestens eine Dämpfungseinheit (50) innerhalb einer Spannungsdurchführung (70) oder einer Stromdurchführung (80) platziert ist.

10. Hochspannungs-Stromrichteranordnung nach einem der Ansprüche 1 bis 9,
wobei die mindestens eine Dämpfungseinheit (50) eine Leiterverbindungsschnittstelle (61) umfasst, die zum ansteckbaren oder lösbaren Montieren der mindestens einen Dämpfungseinheit (50) an der galvanischen Verbindung (20) ausgelegt ist.

11. Hochspannungs-Stromrichteranordnung nach einem der Ansprüche 1 bis 5,
wobei die mindestens eine Dämpfungseinheit einen spiralförmigen Abschnitt (21) der galvanischen Verbindung (20) und ein Widerstandselement (22) umfasst, das parallel zu dem spiralförmigen Abschnitt der galvanischen Verbindung (20) angeordnet ist.

12. Hochspannungs-Stromrichteranordnung nach einem der Ansprüche 1 bis 11, umfassend:
eine Überspannungsschutzvorrichtung (90), die parallel zu der mindestens einen Dämpfungseinheit (50) angeordnet ist, um die mindestens eine Dämpfungseinheit (50) bei vorübergehenden Fehlerfällen vor Überspannung zu schützen.

13. Hochspannungs-Stromrichteranordnung nach einem der Ansprüche 1 bis 12, umfassend:
ein Schutzgehäuse (100), das um die mindestens eine Dämpfungseinheit (50) herum angeordnet ist.

## Revendications

1. Un dispositif convertisseur haute tension, comprenant :
- une pluralité de cellules de commutation (10a, ..., 10l),
- au moins une unité d'amortissement (50) étant configurée pour amortir le bruit électromagnétique causé par une opération de commutation dans les cellules de commutation (10a, ..., 10l),
- sachant que les cellules de commutation (10a, ...,10l) sont interconnectées en série par des connexions galvaniques (20),
- sachant que l'au moins une unité d'amortissement (50) est disposée sur l'une des connexions galvaniques (20) en série avec les cellules de commutation (10a, ... 10l),
- sachant qu'un circuit équivalent électrique de l'au moins une unité d'amortissement (50) comprend au moins une inductance (51) et au moins une résistance (52),
- sachant que l'au moins une unité d'amortissement (50) comprend au moins un noyau magnétique (53) étant disposé autour de la connexion galvanique (20),
**caractérisé en ce que** l'au moins une unité d'amortissement (50) comprend une première et une seconde plaque de support (55a, 55b) étant montées sur la connexion galvanique (20), sachant que l'au moins une unité d'amortissement (50) comprend au moins une tige résistive (56) étant montée entre la première et la seconde plaque de support (55a, 55b), et sachant que l'au moins un noyau magnétique (53) est monté sur la connexion galvanique (20) et disposé entre la première et la seconde plaque de support (55a, 55b).

2. Le dispositif convertisseur haute tension selon la revendication 1,
- sachant que l'au moins une unité d'amortissement (50) a une première borne (50a) étant connectée à la connexion galvanique (20) pour coupler l'au moins une unité d'amortissement (50) en série avec au moins une première des cellules de commutation (10f, 10i),
- sachant que l'au moins une unité d'amortissement (50) a une seconde borne (50b) étant connectée à la connexion galvanique (20) pour coupler l'au moins une unité d'amortissement (50) en série avec au moins une seconde des cellules de commutation (10g, 10j),
- sachant que l'au moins une inductance (51) et l'au moins une résistance (52) de l'au moins une unité d'amortissement (50) sont connectées en parallèle entre la première et la seconde borne (50a, 50b).

3. Le dispositif convertisseur haute tension selon la revendication 2,
- sachant que les cellules de commutation (10a ..., 10l) sont disposées selon une première et une seconde couche (100, 200) dans une structure de valve,
- sachant que la première et la seconde couche (100, 200) des cellules de commutation (10a, ..., 10l) sont empilées l'une sur l'autre dans une direction z et sont espacées l'une de l'autre dans la direction z,
- sachant que les cellules de commutation (10a, ..., 10l) respectives de la première et de la seconde couche (100, 200) sont espacées l'une de l'autre dans la première et la seconde couche (100, 200) dans une direction x et y, sachant que les directions x, y et z sont orthogonales l'une à l'autre,
- sachant que l'au moins une première cellule de commutation (10f, 10i) et l'au moins une seconde cellule de commutation (10g, 10j) sont disposées dans une de la première et de la seconde couche (100, 200).

4. Le dispositif convertisseur haute tension selon la revendication 3,
- sachant que la première et la seconde couche (100, 200) comprennent une première portion (110, 210) respective des cellules de commutation (10a, ..., 101) et une seconde portion (120, 220) respective des cellules de commutation (10a, ..., 101),
- sachant que les cellules de commutation (10a, ..., 101) de la première portion (110, 210) respective de la première et de la seconde couche (100, 200) sont espacées l'une de l'autre dans la direction x le long de la connexion galvanique (20), et les cellules de commutation (10a, ..., 101) de la seconde portion (120, 220) respective de la première et de la seconde couche (100, 200) sont espacées l'une de l'autre dans la direction x le long de la connexion galvanique (20),
- sachant que la première et la seconde portion (110, 120) des cellules de commutation (10a, ..., 101) de la première couche (100) sont espacées l'une de l'autre dans la direction y, et la première et la seconde portion (210, 220) des cellules de commutation (10a, ..., 101) de la seconde couche (200) sont espacées l'une de l'autre dans la direction y,
- sachant que l'au moins une première cellule de commutation (10f) est disposée dans la première portion (110, 210) respective des cellules de commutation de la première et de la seconde couche (100, 200) et l'au moins une seconde cellule de commutation (10g) est disposée dans la seconde portion (120, 220) respective des cellules de commutation de la première et de la seconde couche (100, 200).

5. Le dispositif convertisseur haute tension selon la revendication 2,
- sachant que les cellules de commutation (10a, ..., 10d) sont disposées en premier et second groupes (G1, G2) disposés horizontalement ou empilés verticalement,
- sachant que l'au moins une unité d'amortissement (50) est disposée entre l'au moins une première cellule de commutation (10d) et l'au moins une seconde cellule de commutation (10a)
- sachant que l'au moins une première cellule de commutation (10d) est disposée dans le premier groupe (G1) et l'au moins une seconde cellule de commutation (10a) est disposée dans le second groupe (G2).

6. Le dispositif convertisseur haute tension selon l'une quelconque des revendications 1 à 5,
sachant que l'au moins une unité d'amortissement (50) comprend un revêtement résistif (57) et/ou un revêtement protecteur (58) appliqué sur l'au moins un noyau magnétique (53).

7. Le dispositif convertisseur haute tension selon l'une quelconque des revendications 1 à 6,
sachant que l'au moins un noyau magnétique (53) a des ailettes de refroidissement (59) de dissipation de la chaleur.

8. Le dispositif convertisseur haute tension selon l'une quelconque des revendications 1 à 7,
sachant que l'au moins une unité d'amortissement (50) comprend un matériau à haute conductivité thermique (60) étant disposé entre la connexion galvanique (20) et l'au moins un noyau magnétique (53).

9. Le dispositif convertisseur haute tension selon l'une quelconque des revendications 1 à 8,
sachant que l'au moins une unité d'amortissement (50) est placée à l'intérieur d'une traversée de puissance (70) ou d'une traversée de courant (80).

10. Le dispositif convertisseur haute tension selon l'une quelconque des revendications 1 à 9,
sachant que l'au moins une unité d'amortissement (50) comprend une interface de connexion de conducteur (61) configurée pour monter de manière attachable ou détachable l'au moins une unité d'amortissement (50) sur la connexion galvanique (20)

11. Le dispositif convertisseur haute tension selon l'une quelconque des revendications 1 à 5,
sachant que l'au moins une unité d'amortissement comprend une portion en forme d'hélice (21) de la connexion galvanique (20), et un élément résistif (22) étant disposé en parallèle à la portion en forme d'hélice de la connexion galvanique (20).

12. Le dispositif convertisseur haute tension selon l'une quelconque des revendications 1 à 11, comprenant :
un appareil de protection contre les surtensions (90) étant disposé en parallèle à l'au moins une unité d'amortissement (50) pour protéger l'au moins une unité d'amortissement (50) contre les surtensions pendant les cas de défauts fugitifs.

13. Le dispositif convertisseur haute tension selon l'une quelconque des revendications 1 à 12, comprenant : un logement de protection (100) étant disposé autour de l'au moins une unité d'amortissement (50).
